# EUROPÄISCHE PATENTSCHRIFT

(11) **EP 1 200 517 B1**
(45) Veröffentlichungstag und Bekanntmachung des Hinweises auf die Patenterteilung: **02.07.2003**
(21) Anmeldenummer: 00943969.6
(22) Anmeldetag: 03.07.2000
(51) Int. Cl.: C08K 5/01, C08L 69/00

(54) **POLYCARBONATFORMMASSEN MIT GUTER ENTFORMUNG UND DARAUS HERGESTELLTE FORMKÖRPER UND HALBZEUGE**
POLYCARBONATE MOLDING COMPOUNDS WITH GOOD DEMOLDING PROPERTIES AND MOLDED BODIES AND SEMIFINISHED PRODUCTS PRODUCED FROM THE SAME
MATIERE MOULABLE DE POLYCARBONATE FACILE A DEMOULER ET CORPS MOULES ET PRODUITS SEMI-FINIS OBTENUS A PARTIR DE CETTE MATIERE

(30) Priorität: 13.07.1999 DE 19932170
(43) Veröffentlichungstag der Anmeldung: 02.05.2002
(73) Patentinhaber: Bayer Aktiengesellschaft, 51368 Leverkusen (DE)
(72) Erfinder: EBERT, Wolfgang, D-47800 Krefeld (DE); KAUFMANN, Ralf, D-47228 Duisburg (DE); SCHWEMLER, Christoph, D-42799 Leichlingen (DE); HAESE, Wilfried, D-51519 Odenthal (DE); FISCHER, Peter, D-50676 Köln (DE); DÖBLER, Martin, D-40593 Düsseldorf (DE); GENZ, Joachim, D-47803 Krefeld (DE)
(86) Internationale Anmeldenummer: EP0006178
(87) Internationale Veröffentlichungsnummer: WO01004199

(56) Entgegenhaltungen:
- EP-A- 0 699 713
- US-A- 5 018 828

## Beschreibung

Gegenstand der vorliegenden Erfindung sind gut entformende Polycarbonatformmassen mit methylverzweigten Alkanen oder Alkanmischungen als Entformungsmitteln, gegebenfalls neben anderen Polycarbonat-üblichen Additiven.

Patente und Veröffentlichungen, die die entformende Wirkung von Additiven in Thermoplasten allgemein und insbesondere Polycarbonat beschreiben, sind zahlreich/legion. Die am häufigsten als Entformungsmittel eingesetzten Substanzen sind die Ester aus langkettigen aliphatischen Säuren und Alkoholen. Beispielhaft seien hier die Verwendung von Estern aus Fettsäurealkoholen oder Polyolen wie z. B. Pentaerythrit mit Fettsäuren genannt, wie sie in DE 33 12 158, EP 100 918, EP 103 107, EP 561 629, EP 352 458, EP 436 117 beschrieben werden oder wenn Guerbetalkohole benutzt wurden US 5 001 180, DE 33 12 157, US 5 744 626. Alle diese Ester haben den Nachteil, daß sie in Abhängigkeit von katalytisch wirkenden Verunreinigungen und der Verarbeitungstemperatur zu Umesterungen mit dem Polycarbonat neigen. Dieses wird gerade bei den für kurze Cycluszeiten notwendigen hohen Massetemperaturen deutlich.

Andere Entformungsmittel die diesen Nachteil nicht haben wie langkettige Ketone, neigen durch Eigenkondensation zur Bildung von Chromophoren und sind schwer zugänglich (EP 100 918).

Siloxane die ebenfalls verwendet werden (US 4 536 590, US 4 390 651, US 3 751 519) besitzen eine ausreichende Temperaturbeständigkeit sind jedoch sehr schlecht mit Polycarbonat vertäglich und führen in den zur Wirksamkeit notwendigen Konzentrationen zu Trübungen.

α-Olefinpolymerisate (EP 561 630, EP 230 015) mit verbleibenden Doppelbindungen (DE 32 44 499) sind nicht farbstabil, bei hydrierten Systemen besteht ebenfalls wie bei den langkettigen Alkanen (US 4 415 696) ein Verträglichkeitsproblem mit Polycarbonat, außerdem ist die wachsartige oft teils flüssige teils wächserne Konsistenz dieser Produkte hinderlich.

Die verzugsfreie Entformung von Polycarbonatformteilen, unter Erhalt der sehr hochwertigen Oberfläche, stellt durch die Forderungen nach kürzeren Cycluszeiten und höheren Verarbeitungstemperaturen, bei immer komplizierter werdenden Formen, eine immer währende Herausforderung dar. Viele Probleme lassen sich oft nur mit einer maßgeschneiderten Entformungsrezeptur bewältigen. Es besteht daher ein beständiger Bedarf an neuen potentiellen Entformungsmitteln. Die Aufgabe bestand daher darin Entformungsmittel zu finden, die nicht zu Umesterungen mit dem Polycarbonat neigen, andererseits jedoch auch keine Formenbeläge bilden und in den wirksamen Konzentrationen nicht zu Trübungen oder Verfärbungen führen.

Die Aufgabe bestand daher darin, eine gut entformende Formmasse zu entwickeln, die neben hervorragenden Entformungseigenschaften und Transparenz über genügende Temperaturstabilität ohne Verfärbung oder Umesterung verfügt.

Die Aufgabe wurde gelöst durch die Verwendung von methylverzweigten Alkanen die über eine ausreichende Löslichkeit und Stabilität in Polycarbonat verfügen.

Gegenstand der vorliegenden Erfindung sind Polycarbonatformmassen mit einem Gehalt an Kohlenwasserstoffen mit 15 bis 600 Kohlenstoffatomen wobei diese Kohlenwasserstoffe in Mengen von 0,005 bis 5,0 Gew-% bezogen auf das Gewicht der gesamten Formmasse enthalten sind, und diese Kohlenwasserstoffe aus methylverzweigten Alkanketten bestehen, wobei sie einen Gewichtsanteil von Verzweigungen zwischen 5 Gew % und 30 Gew % bezogen auf die Kohlenstoffe der Kette aufweisen.

Der bevorzugte Gehalt an Kohlenwasserstoffen beträgt 0,01 bis 2,0 Gew-%, ganz besonders bevorzugt 0,02 bis 1,0 Gew-%.

Kohlenwasserstoffe mit 15 bis 100 Kohlenstoffatomen sind ebenfalls bevorzugt, besonders bevorzugt sind solche mit 15 bis 40 Kohlenstoffatomen.

Die erfindungsgemäßen Kohlenwasserstoffe bestehen besonders bevorzugt aus Alkanen an denen die Kohlenstoffe der verzweigenden Methylgruppen einen Gewichtsanteil, bezogen auf die Kohlenstoffe der Kette, zwischen 10 Gew % und 30 Gew % haben, besonders bevorzugt sind solche, die, in diesem Fall vor Hydrierung, aus Isopreneinheiten, besonders bevorzugt zu mehr als 90% hydrierte Isopreneinheiten, ganz besonders bevorzugt zu mehr als 95 % hydrierte Isopreneinhciten gegebenenfalls unter Verwendung von Comonomeren, insbesondere 2,3-Dimethylbutadien, Butadien, Propen und/oder Isobuten, im Bereich von 0-50 Mol % (bezogen auf die Isopreneinheiten), insbesondere jedoch solche die, vor Sättigung der Doppelbindungen, formal aus Isopreneinheiten aufgebaut sind, wobei solche bevorzugt sind die 15, 20, 25, 30, 35 oder 40-C-Atomen enthalten oder deren Mischungen, ganz besonders bevorzugt ist Squalan, (30 C-Atome).

Gegebenfalls können die Polycarbonatformmassen mit anderen in Polycarbonat üblichen Additiven versetzt werden, wie z.B. Thermostabilisatoren, UV/IR-Stabilisatoren, anderen Entformungsmitteln, Flammschutzmitteln, Antidrippingmitteln, Gleitmitteln, Fließhilfsmitteln, Füllstoffen, Farbmitteln wie Pigmenten oder Farbkonzentraten, Glasfasern, Füllstoffen und Blendpartnern wie ABS, SAN, EPDM oder Polyestern auf Basis von Terephthalsäure und Diolen.

Die erfindungsgemäßen Formmassen können mit Verunreinigungen, die die einzelnen Bestandteile der Formmasse aus ihrer Synthese, Aufarbeitung, Verarbeitung und Lagerung enthalten, sowie Kontaminationen die während der Herstellung oder Verarbeitung der erfindungsgemäßen Formmassen stammen, verunreinigt sein. Das Ziel ist es jedoch mit so sauberen Produkten wie möglich zu arbeiten.

Erfindungsgemäße Alkane sind solche natürlichen oder synthetischen Ursprungs mit seitenständigen Methylgruppen und insgesamt 15 bis 600 Kohlenstoffatomen, bevorzugt 15 bis 100 Kohlenstoffatomen, wobei auch Mischungen dieser Kohlenwasserstoffe Gegenstand des Patentes sind. Bevorzugt sind Kohlenwasserstoffe die formal oder durch tatsächliche Synthese zu 50-100 Mol% aus Isopreneinheiten aufgebaut sind, d.h. diese C₅-Einheit enthalten nach Sättigung der nach der Polymerisation verbleibenden Doppelbindungen, mit der Maßgabe, daß die Kohlenstoffe der verzweigenden Methylgruppen einen Gewichtsanteil, bezogen auf die Kohlenstoffe der Kette, zwischen 10 Gew % und 30 Gew % , bevorzugt zwischen 10 Gew % und 30 Gew %, haben. Comonomere, wie sie neben Isopren verwendet werden können sind solche wie sie in der Gummiherstellung und Polyolefinchemie üblich sind, besonders 2,3-Dimethylbutadien, Butadien, Propen und/oder Isobuten. Besonders bevorzugt sind solche gesättigten Aliphaten wie sie rein rechnerisch, vor Sättigung der verbleibenden Doppelbindungen, aus Isopren über "Kopf-Kopf"- oder "Kopf-Schwanz"-Verknüpfung entstehen, wobei auch beide Verknüpfungsarten nebeneinander vorkommen können, insbesondere Squalan.

Verwendet werden können auch Mischungen der erfindungsgemäßen Kohlenwasserstoffe gegebenfalls auch mit Beimischungen von anderen, auch linearen Alkanen zwischen 0 und 30 Gew-%, bezogen auf die Menge erfindungsgemäßer Alkane.

Die verwendeten Alkane sollten möglichst geringe Reste an Doppelbindungen haben wünschenswert sind Jodzahlen unter 10, möglichst unter 5.

Die erfindungsgemäßen Alkane sind handelsüblich und können im Chemikalienhandel beschafft werden.

Thermoplastische, aromatische Polycarbonate im Sinne der vorliegenden Erfindung sind sowohl Homopolycarbonate als auch Copolycarbonate; die Polycarbonate können in bekannter Weise linear oder verzweigt sein.

Ein Teil, bis zu 80 Mol-%, vorzugsweise von 20 Mol-% bis zu 50 Mol-% der Carbonat-Gruppen in den erfindungsgemäß geeigneten Polycarbonaten können durch aromatische Dicarbonsäureester-Gruppen ersetzt sein. Derartige Polycarbonate, die sowohl Säurereste der Kohlensäure als auch Säurereste von aromatischen Dicarbonsäuren in die Molekülkette eingebaut enthalten, sind, genau bezeichnet, aromatische Polyestercarbonate. Sie sollen der Einfachheit halber in vorliegender Anmeldung unter dem Oberbegriff der thermoplastischen, aromatischen Polycarbonate subsumiert werden.

Die Herstellung der erfindungsgemäß zu verwendenden Polycarbonate erfolgt in bekannter Weise aus Diphenolen, Kohlensäurederivaten, gegebenenfalls Kettenabbrechern und gegebenenfalls Verzweigern, wobei zur Herstellung der Polyestercarbonate ein Teil der Kohlensäurederivate durch aromatische Dicarbonsäuren oder Derivate der Dicarbonsäuren ersetzt wird, und zwar je nach Maßgabe der in den aromatischen Polycarbonaten zu ersetzenden Carbonatstruktureinheiten durch aromatische Dicarbonsäureesterstruktureinheiten.

Einzelheiten der Herstellung von Polycarbonaten sind in Hunderten von Patentschriften seit etwa 40 Jahren niedergelegt. Beispielhaft sei hier nur auf
- Schnell, "Chemistry and Physics of Polycarbonates", Polymer Reviews, Volume 9, Interscience Publishers, New York, London, Sydney 1964;
- D.C. Prevorsek, B.T. Debona und Y. Kesten, Corporate Research Center, Allied Chemical Corporation, Morristown, New Jersey 07960: "Synthesis of Poly(ester Carbonate) Copolymers" in Journal of Polymer Science, Polymer Chemistry Edition, Vol. 19, 75-90 (1980)";
- D. Freitag, U. Grigo, P.R. Müller, N. Nouvertne', BAYER AG, "Polycarbonates" in Encyclopedia of Polymer Science and Engineering, Volume 11, Second Edition, 1988, Seiten 648-718 und schließlich
- Dres. U. Grigo, K. Kircher und P. R- Müller "Polycarbonate" in Becker/Braun, Kunststoff-Handbuch, Band 3/1, Polycarbonate, Polyacetale, Polyester, Celluloseester, Carl Hanser Verlag München, Wien 1992, Seiten 117-299 verwiesen.

Die thermoplastischen Polycarbonate einschließlich der thermoplastischen, aromatischen Polyestercarbonate haben mittlere Molekulargewichte Mw (ermittelt durch Messung der relativen Viskosität bei 25°C in CH₂Cl₂ und einer Konzentration von 0,5 g pro 100 ml CH₂Cl₂) von 12 000 bis 120 000, vorzugsweise von 15 000 bis 80 000 und insbesondere von 15 000 bis 60 000.

Für die Herstellung der erfindungsgemäß zu verwendenden Polycarbonate geeignete Diphenole sind beispielsweise Hydrochinon, Resorcin, Dihydroxydiphenyl, Bis-(hydroxyphenyl)-alkane, Bis(hydroxy-phenyl)-cycloalkane, Bis-(hydroxyphenyl)-sulfide, Bis-(hydroxyphenyl)-ether, Bis-(hydroxyphenyl)-ketone, Bis-(hydroxyphenyl)-sulfone, Bis-(hydroxyphenyl)-sulfoxide, (α,α'-Bis-(hydroxyphenyl)-diisopropylbenzole, sowie deren kernalkylierte und kernhalogenierte Verbindungen.

Bevorzugte Diphenole sind 4,4'-Dihydroxydiphenyl, 2,2-Bis-(4-hydroxyphenyl)-1-phenyl-propan, 1,1-Bis-(4-hydroxyphenyl)-phenyl-ethan, 2,2-Bis-(4-hydroxyphenyl)propan, 2,4-Bis-(4-hydroxyphenyl)-2-methylbutan, 1,1-Bis-(4-hydroxyphenyl)-m/p diisopropylbenzol, 2,2-Bis-(3-methyl-4-hydroxyphenyl)-propan, Bis-(3,5-dimethyl-4-hydroxyphenyl)-methan, 2,2-Bis-(3,5-dimethyl-4-hydroxyphenyl)-propan, Bis-(3,5-dimethyl-4-hydroxyphenyl)-sulfon, 2,4-Bis-(3,5-dimethyl-4-hydroxyphenyl)-2-methylbutan, 1,1-Bis-(3,5-dimethyl-4-hydroxyphenyl)-m/p-diisopropyl-benzol, 2,2- und 1,1-Bis-(4-hydroxyphenyl)-3,3,5-trimethylcyclohexan.

Besonders bevorzugte Diphenole sind 4,4'-Dihydroxydiphenyl, 1,1-Bis-(4-hydroxyphenyl)-phenyl-ethan, 2,2-Bis-(4-hydroxyphenyl)-propan, 2,2-Bis(3,5-dimethyl-4-hydroxyphenyl)-propan, 1, 1 -Bis-(4-hydroxyphenyl)-cyclohexan, 1,1-Bis-(4-hydroxyphenyl)-m/p diisopropylbenzol und 1,1-Bis-(4-hydroxyphenyl)-3,3,5-trimethylcyclohexan.

Diese und weitere geeignete Diphenole sind z.B. in den US-PS 3 028 635, 2 999 835, 3 148 172, 2 991 273, 3 271 367, 4 982 014 und 2 999 846, in den deutschen Offenlegungsschriften 1 570 703, 2 063 050, 2 036 052, 2 211 956 und 3 832 396, der französischen Patentschrift 1 561 518, in der Monographie "H. Schnell, Chemistry and Physics of Polycarbonates, Interscience Publishers, New York 1964" sowie in den japanischen Offenlegungsschriften 62039/1986, 62040/1986 und 105550/1986 beschrieben.

Im Falle der Homopolycarbonate wird nur ein Diphenol eingesetzt, im Falle der Copolycarbonate werden mehrere Diphenole eingesetzt, wobei selbstverständlich die verwendeten Bisphenole, wie auch alle anderen der Synthese zugesetzten Chemikalien und Hilfsstoffe mit den aus ihrer eigenen Synthese stammenden Verunreinigungen kontaminiert sein können, obwohl es wünschenswert ist, mit möglichst sauberen Rohstoffen zu arbeiten.

Geeignete Kettenabbrecher sind sowohl Monophenole als auch Monocarbonsäuren. Geeignete Monophenole sind Phenol, Alkylphenole wie Kresole, p-tert.Butylphenol, p-n-Octylphenol, p-iso-Octylphenol, p-n-Nonylphenol und p-iso-Nonylphenol, Halogenphenole wie p-Chlorphenol, 2,4-Dichlorphenol, p-Bromphenol und 2,4,6-Tribromphenol, bzw. deren Mischungen.

Geeignete Monocarbonsäuren sind Benzoesäure, Alkylbenzoesäuren und Halogenbenzoesäuren.

Bevorzugte Kettenabbrecher sind die Phenole der Formel (I)

R⁶--Ph―OH (I)

worin R⁶ für H oder einen verzweigten oder unverzweigten C₁- C₁₈-Alkylrest steht.

Die Menge an einzusetzendem Kettenabbrecher beträgt 0,5 Mol-% bis 10 Mol-%, bezogen auf Mole an jeweils eingesetzten Diphenolen. Die Zugabe der Kettenabbrecher kann vor, während oder nach der Phosgenierung erfolgen.

Geeignete Verzweiger sind die in der Polycarbonatchemie bekannten tri- oder mehr als trifunktionellen Verbindungen, insbesondere solche mit drei oder mehr als drei phenolischen OH-Gruppen.

Geeignete Verzweiger sind beispielsweise Phloroglucin, 4,6-Dimethyl-2,4,6-tri-(4-hydroxyphenyl)-hepten-2,4,6-Dimethyl-2,4,6-tri-(4-hydroxyphenyl)-heptan, 1,3,5-Tri-(4-hydroxyphenyl)-benzol, 1,1,1-Tri-(4-hydroxyphenyl)-ethan, Tri-(4-hydroxyphenyl)-phenylmethan, 2,2-Bis-[4,4-bis-(4-hydroxyphenyl)-cyclohexyl]-propan, 2,4-Bis-(4-hydroxyphenyl-isopropyl)-phenol, 2,6-Bis-(2-hydroxy-5'-methylbenzyl)-4-methylphenol, 2-(4-Hydroxyphenyl)-2-(2,4-dihydroxyphenyl)-propan, Hexa-(4-(4-hydroxyphenyl-isopropyl)phenyl)-orthoterephthalsäureester, Tetra-(4-hydroxyphenyl)-methan, Tetra-(4-(4-hydroxy-phenyl-isopropyl)-phenoxy)-methan und 1,4-Bis(4',4"-dihydroxy-triphenyl)-methyl)-benzol sowie 2,4-Dihydroxybenzoesäure, Trimesinsäure, Cyanurchlorid und 3,3-Bis-(3-methyl-4-hydroxyphenyl)-2-oxo-2,3-dihydroindol.

Die Menge der gegebenenfalls einzusetzenden Verzweiger beträgt 0,05 Mol-% bis 2,5 Mol-%, bezogen wiederum auf Mole an jeweils eingesetzten Diphenolen.

Die Verzweiger können entweder mit den Diphenolen und den Kettenabbrechern in der wäßrig alkalischen Phase vorgelegt werden, oder in einem organischen Lösungsmittel gelöst vor der Phosgenierung zugegeben werden.

Alle diese Maßnahmen zur Herstellung der Polycarbonate sind dem Fachmann geläufig.

Für die Herstellung der Polyestercarbonate geeignete aromatische Dicarbonsäuren sind beispielsweise Phthalsäure, Terephthalsäure, Isophthalsäure, tert.-Butylisophthalsäure, 3,3'-Diphenyldicarbonsäure, 4,4'-Diphenyldicarbonsäure, 4,4-Benzophenondicarbonsäure, 3,4'-Benzophenondicarbonsäure, 4,4'-Diphenyletherdicarbonsäure, 4,4'-Diphenylsulfondicarbonsäure, 2,2-Bis-(4-carboxyphenyl)-propan, Trimethyl-3-phenylindan-4,5'-dicarbonsäure.

Von den aromatischen Dicarbonsäuren werden besonders bevorzugt die Terephthalsäure und/oder Isophthalsäure eingesetzt.

Derivate der Dicarbonsäuren sind die Dicarbonsäuredihalogenide und die Dicarbonsäuredialkylester, insbesondere die Dicarbonsäuredichioride und die Dicarbonsäuredimethylester.

Der Ersatz der Carbonatgruppen durch die aromatischen Dicarbonsäureestergruppen erfolgt im wesentlichen stöchiometrisch und auch quantitativ, so daß das molare Verhältnis der Reaktionspartner sich auch im fertigen Polyestercarbonat wiederfindet. Der Einbau der aromatischen Dicarbonsäureestergruppen kann sowohl statistisch als auch blockweise erfolgen.

Bevorzugte Herstellungsweisen der erfindungsgemäß zu verwendenden Polycarbonate, einschließlich der Polyestercarbonate, sind das bekannte Grenzflächenverfahren und das bekannte Schmelzumesterungsverfahren.

Im ersten Fall dient als Kohlensäurederivat vorzugsweise Phosgen, im letzteren Fall vorzugsweise Diphenylcarbonat. Katalysatoren, Lösungsmittel, Aufarbeitung, Reaktionsbedingungen etc. für die Polycarbonatherstellung sind in beiden Fällen hinreichend beschrieben und bekannt.

Die Herstellung der erfindungsgemäßen Formmassen durch Zugabe der erfindungsgemäßen Alkane während der Synthese in die Schmelze oder im Falle des Phasengrenzflächenprozesses einem Aufarbeitungs- oder Konzentrierungsschrittes, aber auch in Lösung erfolgen, indem man die Polycarbonate, gelöst in einem Polycarbonatlösungsmittel, simultan oder sukzessive mit den erfindungsgemäßen Alkanen und gegebenfalls weiteren Additiven versetzt und das Polycarbonatlösungsmittel anschließend abdampft.

Gegenstand der vorliegenden Erfindung ist somit auch ein Verfahren zur Herstellung der erfindungsgemäßen Polycarbonatformmassen, das dadurch gekennzeichnet ist, daß man Polycarbonate mit den erfindungsgemäßen Alkanen entweder simultan oder sukzessive, entweder in Substanz oder in Lösung, vermischt, und danach die Gemische entweder bei Temperaturen zwischen 260°C und 360°C schmelzcompoundiert oder bei Temperaturen zwischen 250°C und 320°C schmelzextrudiert, oder die Polycarbonatlösungen eindampft und das erhaltene Gemisch granuliert.

Die erfindungsgemäßen Polycarbonatformmassen können noch die üblichen Additive, wie Glasfasern, Füllstoffe, Pigmente, UV-, Thermo-Stabilisatoren, Antioxidantien und andere Entformungsmittel, in den für thermoplastische Polycarbonate üblichen Mengen enthalten.

Geeignete Glasfasern sind alle im Handel erhältlichen Glasfasersorten und -typen , also geschnittene Glassorten Langglasfasern ( chopped strands ) und Kurzglas ( milled fibres ) , sofern sie durch geeignete Schlichten Polycarbonat - verträglich ausgerüstet sind.

Die zur Herstellung der Formmassen verwendeten Glasfasern sind aus E - Glas hergestellt. Unter E - Glas versteht man nach DIN 1259 ein Aluminium - Bor - Silikat - Glas , mit einem Alkalioxid - Gehalt unter 1 Gew. -% . Üblicherweise werden Glasfasern mit einem Durchmesser von 8 bis 20 µm und einer Länge von 3 bis 6 mm( chopped strands ) verwendet . Es kann auch Kurzglas zum Einsatz kommen( milled fibres ), ebenso geeignete Glaskugeln.

Flammschutzmittel wie sie z. B. in Polycarbonat Verwendung finden und auch in den erfindungsgemäßen Formmassen verwendet werden können, sind Alkalisalze organischer und anorganischer Säuren, insbesondere Sulfonsäuren wie beispielsweise Natrium- oder Kalium-perfluorbutansulfonat, Kalium-hexafluoroaluminat, Natriumhexafluoroaluminat, Kalium-diphenylsulfon-sulfonat, Natrium-2-formylbenzolsulfonat, Natrium-(N-benzolsulfonyl)-benzolsulfonamid, oft in Kombination mit anderen Flammschutzmitteln, wie halogenierte organische Vcrbindungen, Kryolith und Teflon. Ebenfalls sind Mischungen der genannten Additive geeignet.

Diese üblichen Additive können in bekannter Weise zusammen mit den erfindungsgemäßen Komponenten oder danach den flammwidrig auszurüstenden Polycarbonaten zugesetzt werden.

Die erfindungsgemäßen Polycarbonatformmassen können auf den üblichen Verarbeitungsmaschinen nach bekannten Methoden unter den für Polycarbonat üblichen Verarbeitungsparametern zu Formkörpern verarbeitet werden.

Gegenstand der Erfindung sind daher auch die aus den erfindungsgemäßen Formmassen gefertigten Teile wie Formteile und Halbzeuge.

Die Formteile finden beispielsweise Anwendung im Elektro-, Elektronik-, Beleuchtungs-, Computer-, Bau-, Fahrzeug- und/oder Flugzeugsektor.

Gegenstand der Erfindung sind daher auch die aus ihnen hergestellten Spritzguß- und Extrusionsartikel, wie beispielsweise optische Datenspeicher, wie CD's, DVD's und deren Weiterentwicklungen, Folien , Platten , Hohlkammerplatten, Leuchten, Gehäuse für Elektrogeräte, Computer oder Kraftfahrzeugausrüstungen wie Scheiben und Scheinwerferstreuscheiben, Armaturenbretteile, Verkleidungen und ähnliches besonders transparente Anwendungen wie CD's, DVD's und deren Weiterentwicklungen, Folien, Platten, Hohlkammerplatten, Leuchten, oder Kraftfahrzeugausrüstungen wie Scheiben und Scheinwerferstreuscheiben, insbesondere optische Datenspeicher, wie CD's, DVD's und deren Weiterentwicklungen.

### Beispiele

Die Mengenangaben in den Beispielen, ausgedrückt in Gew.-%, beziehen sich auf das Gewicht der Gesamtmischung.

### Beispiele 1 bis 7

Auf ein aromatisches Polycarbonat aus 2,2-Bis-(4-hydroxyphenyl)-propan (ηrel = 1,293) mit Phenol als Kettenabbrecher wurde 0,05 % bis 4,0 ppm erfindungsgemäßes Alkan aufgebracht und bei 280°C auf einem Doppelwellenextruder (ZSK 32/2) bei Vakuumentgasung aufgeschmolzen. Oder es wird das erfindungsgemäße Additiv, zusammen mit gegebenfalls anderen Additiven direkt in die Polycarbonatschmelze dosiert. Der extrudierte Formmassenstrang wurde gekühlt und granuliert. Das Granulat wurde im Vakuumtrockenschrank bei 80°C für 24 h getrocknet und auf einer Spritzgußmaschine des bei einer Massetemperatur von 300 °C immer das gleiche rotationssymmetrische Werkstück bei einer Formentemperatur von 100 °C abgespritzt. Anschließend wird durch die Kraft die notwendig ist das Formteil auszustossen , bzw. die notwendig ist das Formteil in der Form zu drehen, die Reibungskoeffizienten der Haft- und Gleitreibung bestimmt, die als Maß für die entformende Wirkung herangezogen wurden. Kleinere Werte sind daher gegenüber hohen Werten vorteilhaft.

### Versuche 1 bis 5 : Entformungsversuche im 0.05% Entformungsmittel-Bereich, wie in CD's üblich

| **Versuch** | | | ***1*** | ***2*** | **3** | **4** | **5** |
|---|---|---|---|---|---|---|---|
| Polycarbonat ηrel = 1,193 | | % | *100* | *99,95-* | *99,95-* | *99,95-* | *99,95-* |
| Entformungsmittel I | | % | - | *0,050* | | - | - |
| Entformungsmittel II | | % | | | *0,050* | *-* | *-* |
| Aliphat A | | % | | | - | 0,050 | - |
| Aliphat A (Reproduktion) | | % | | | | | 0,050 |

| **Bestimmung des Reibungskoeffizienten** | | | | | | | |
|---|---|---|---|---|---|---|---|
| Haftreibungkoeffizient | N / mm² | | *1,15* | *0,62* | 1,17 | 0,77 | 0.70 |
| Gleitreibungkoeffizient | N / mm² | | *0,84* | *0,67* | 0,93 | 0,76 | 0,73 |

- Entformungsmittel I:: Vergleich: Sehr gutes aber umesterungsaktives Entformungsmittel des Standes der Technik (GMS Glycerinmonostearat)
- Entformungsmittel II:: Vergleich: gutes, aber weniger umesterungsaktives Entformungsmittel des Standes der Technik (PETS = Pentaerythrittetrastearat)
- Aliphat A:: Erfindungsgemäß; Hexamethyltetracosan, "Squalan"

Wie die Versuche zeigen, ist der erfindungsgemäße Entformer Hexamethyltetracosan "Squalan" ein sehr wirksames Entformungsmittel bei Konzentrationen um 500 ppm, wie sie zum Beispiel in Formmassen für optische Speicher, also CD's, DVD's üblich sind.

### Versuche zur Herstellung von CD's im Technikum

Aus den obigen erfindungsgemäßen Formmassen der Versuche 4 und 5 wurden auf einem CD-Werkzeug CD's mit einer Cycluszeit von 4 sec und einer Massetemperatur von 320°C in einem Technikum hergestellt.

Es wurden keine Entformungsprobleme, Ablagerungen oder sonstige Störungen festgestellt.

### Versuche 6 bis 12: Entformungsversuche im 0.1 %bis 0,4 % Entformungsmittel-Bereich, wie im Spritzguß üblich.

| **Versuch** | | ***6*** | ***7*** | ***8*** | ***9*** | ***10*** | ***11*** | ***12*** |
|---|---|---|---|---|---|---|---|---|
| Polycarbonat ηrel = 1,293 | % | *100* | *99,8* | *99,8* | *99,9* | *99,8* | *99,7* | *99,6* |
| Entformer I | % | | *0,2* | | | | | |
| Entformer II | % | | | 0,2 | | | | |
| Aliphat A | % | | | | *0,1* | | | |
| Aliphat A | % | | | | | *0,2* | | |
| Aliphat A | % | | | | | | *0,3* | |
| Aliphat A | % | | | | | | | *0,4* |
| | | | | | | | | |

| **Bestimmune des Reibungskoeffizienten** | | | | | | | | |
|---|---|---|---|---|---|---|---|---|
| Haftreibung-koeffizient | | *0,97* | *0,32* | *0,47* | *0,64* | *0,56* | *0,50* | *0,49* |
| Gleitreibungk oeffizient | | *0,73* | *0,39* | *0,58* | *0,65* | *0,58* | *0,50* | *0,49* |
| Legende wie bei Beispielen 1-5 | | | | | | | | |

Die Versuche belegen, daß der erfindungsgemäße Entformer Hexamethyltetracosan "Squalan" auch ein sehr wirksames Entformungsmittel bei Konzentrationen um 1000 bis 4000 ppm ist, wie sie zum Beispiel in Formmassen für Spritzgußartikel oder Halbzeuge die über Extrusion hergestellt werden üblich sind, also beispielhaft Streuscheiben und Platten zur verscheibung bei Automobilen, Platten, Folien, Leuchten, Gehäusen (z.B. für Computer).

## Patentansprüche

1. Polycarbonatformmassen mit einem Gehalt an Kohlenwasserstoffen mit 15 bis 600 Kohlenstoffatomen, **dadurch gekennzeichnet, daß**
diese Kohlenwasserstoffe in Mengen von 0,005 bis 5,0 Gew-% bezogen auf das Gewicht der gesamten Formmasse enthalten sind,
und diese Kohlenwasserstoffe aus methylverzweigten Alkanketten bestehen, wobei sie einen Gewichtsanteil von Verzweigungen zwischen 5 Gew % und 30 Gew % bezogen auf die Kohlenstoffe der Kette aurweisen.

2. Polycarbonatformmassen nach Anspruch 1, **dadurch gekennzeichnet, daß** 0,01 bis 2,0 Gew-%, bevorzugt 0,02 bis 1,0 Gew-% Kohlenwasserstoffe enthalten sind.

3. Polycarbonatformmassen nach Anspruch 1, **dadurch gekennzeichnet, daß** zwischen 10 Gew % und 30 Gew % Verzweigungen vorliegen.

4. Polycarbonatformmassen nach Anspruch 1, **dadurch gekennzeichnet, daß** die Kohlenwasserstoffe aus 15 bis 100 Kohlenstoffatomen, besonders aus 15 bis 40 Kohlenstoffatomen bestehen und ganz besonders Isopreneinheiten, bevorzugt hydrierte Isopreneinheiten, besonders bevorzugt zu mehr als 90 % hydrierte Isopreneinheiten, ganz besonders bevorzugt zu mehr als 95 % hydrierte Isopreneinheiten enthalten,

5. Polycarbonatformmassen nach Anspruch 4, **dadurch gekennzeichnet, daß** zusätzlich zu den Isopreneinheiten noch 2,3-Dimethylbutadien, Butadien, Propen und/oder Isobuten, im Bereich von 0-50 Mol % (bezogen auf die Isopreneinheiten), enthalten sind.

6. Polycarbonatformmassen nach Anspruch 1, **dadurch gekennzeichnet, daß** die Kohlenwasserstoffe aus 15, 20, 25, 30, 35 oder 40-C-Atomen bestehen oder Mischungen der vorstehenden Kohlenwasserstoffe sind, ganz besonders bevorzugt Squalan (30 C-Atome).

7. Polycarbonatformmassen nach einem der vorstehenden Ansprüche, **dadurch gekennzeichnet, daß** zusätzlich gegebenfalls andere in Polycarbonat übliche Additive wie z.B. Thermostabilisatoren, UV/IR-Stabilisatoren, andere Entformungsmittel, Flammschutzmittel, Antidrippingmittel, Gleitmittel, Fließhilfsmittel, Füllstoffe, Farbmittel wie Pigmenten oder Farbkonzentrate, Glasfasern, Füllstoffe und Blendpartner wie ABS, SAN, EPDM oder Polyester auf Basis von Terephthalsäure und Diolen enthalten sind.

8. Formmässen gemäß Anspruch 7, **dadurch gekennzeichnet, daß** die verwendeten Polycarbonate solche auf Basis von 4,4'-Dihydroxydiphenyl, 1,1-Bis-(4-hydroxyphenyl)-phenyl-ethan, 2,2-Bis-(4-hydroxyphenyl)-propan, 2,2-Bis(3,5-dimethyl-4-hydroxyphenyl)-propan, 1,1-Bis-(4-hydroxyphenyl)-m/p diisopropylbenzol, 1, 1 -Bis-(4-hydroxyphenyl)-cyclohexan und 1,1-Bis-(4-hydroxyphenyl)-3,3,5-trimethylcyclohexan sind.

9. Formmassen gemäß Anspruch 7 und/oder 8, **dadurch gekennzeichnet, daß** die verwendeten Polycarbonate solche auf Basis von 2,2-Bis-(4-hydroxyphenyl)-propan und /oder 1,1-Bis-(4-hydroxyphenyl)-3,3,5-trimethylcyclohexan und/ oder 1,1-Bis-(4-hydroxyphenyl)-m/p diisopropylbenzol sind.

10. Formteile hergestellt aus den Formmassen gemäß einem oder mehreren der Ansprüche 1 bis 9, besonders optische Datenspeicher, wie CD's, DVD's und deren Weiterentwicklungen, Massivplatten, Hohlkammerplatten, Automobilverscheibungen, Streuscheiben, Leuchtenabdeckungen, ganz besonders bevorzugt CD's, DVD's und deren Weiterentwicklungen.

## Claims

1. Polycarbonate moulding compositions containing hydrocarbons with 15 to 600 carbon atoms, **characterised in that**
these hydrocarbons are contained in quantities of 0.005 to 5.0 wt.% relative to the weight of the entire moulding composition,
and these hydrocarbons consist of methyl-branched alkane chains, whereby they display a proportion by weight of branches of between 5 wt.% and 30 wt.% relative to the carbons in the chain.

2. Polycarbonate moulding compositions according to claim 1, **characterised in that** they contain 0.01 to 2.0 wt.%, preferably 0.02 to 1.0 wt.%, of hydrocarbons.

3. Polycarbonate moulding compositions according to claim 1, **characterised in that** there are between 10 wt.% and 30 wt.% of branches.

4. Polycarbonate moulding compositions according to claim 1, **characterised in that** the hydrocarbons consist of 15 to 100 carbon atoms, particularly of 15 to 40 carbon atoms, and most particularly contain isoprene units, preferably hydrogenated isoprene units, particularly preferably over 90% hydrogenated isoprene units, most particularly preferably over 95% hydrogenated isoprene units.

5. Polycarbonate moulding compositions according to claim 4, **characterised in that** in addition to the isoprene units they also contain 2,3-dimethyl butadiene, butadiene, propene and/or isobutene, in the range from 0-50 mol% (relative to the isoprene units).

6. Polycarbonate moulding compositions according to claim 1, **characterised in that** the hydrocarbons consist of 15, 20, 25, 30, 35 or 40 C atoms or are mixtures of the above hydrocarbons, most particularly preferably squalane (30 C atoms).

7. Polycarbonate moulding compositions according to one of the above claims, **characterised in that** they optionally also contain other additives conventionally used in polycarbonate, such as e.g. heat stabilisers, UV/IR stabilisers, other release agents, flame retardants, antidripping agents, lubricants, flow promoters, fillers, colorants such as pigments or colour concentrates, glass fibres, fillers and blend components such as ABS, SAN, EPDM or polyesters based on terephthalic acid and diols.

8. Moulding compositions according to claim 7, **characterised in that** the polycarbonates used are those based on 4,4'-dihydroxydiphenyl, 1,1-bis(4-hydroxyphenyl) phenyl ethane, 2,2-bis(4-hydroxyphenyl) propane, 2,2-bis(3,5-dimethyl-4-hydroxyphenyl) propane, 1,1-bis(4-hydroxyphenyl)-m/p-diisopropyl benzene, 1,1-bis(4-hydroxyphenyl) cyclohexane and 1,1-bis(4-hydroxyphenyl)-3,3,5-trimethyl cyclohexane.

9. Moulding compositions according to claim 7 and/or 8, **characterised in that** the polycarbonates used are those based on 2,2-bis(4-hydroxyphenyl) propane and/or 1,1-bis(4-hydroxyphenyl)-3,3,5-trimethyl cyclohexane and/or 1,1-bis(4-hydroxyphenyl)-m/p-diisopropyl benzene.

10. Mouldings produced from the moulding compositions according to one or more of claims 1 to 9, particularly optical data stores such as CDs, DVDs and developments thereof, solid sheets, twin-wall sheets, automotive glazing, headlamp diffusers, lamp covers, most particularly preferably CDs, DVDs and developments thereof.

## Revendications

1. Matières à mouler en polycarbonate avec une teneur en hydrocarbures ayant 15 à 600 atomes, de carbone, **caractérisées en ce que**
ces hydrocarbures sont présents en des quantités allant de 0,005 à 5,0% en poids, sur base du poids de la matière à mouler totale,
et que ces hydrocarbures consistent en des chaînes alcane ramifiées par des radicaux méthyle, où ils présentent une fraction pondérale de ramifications allant de 5% en poids à 30% en poids sur base des carbone de la chaîne.

2. Matières à mouler en polycarbonate selon la revendication 1, **caractérisées en ce que** 0,01 à 2,0% en poids, de préférence de 0,02 à 1,0% en poids d'hydrocarbure sont présents.

3. Matières à mouler en polycarbonate selon la revendication 1, **caractérisées en ce que** 10% en poids à 30% en poids de ramifications sont présentes.

4. Matières à mouler en polycarbonate selon la revendication 1, **caractérisées en ce que** les hydrocarbures consistent en 15 à 100 atomes de carbone, en particulier de 15 à 40 atomes de carbone, et contiennent tout particulièrement des unités isoprène, de préférence des unités isoprène hydrogénées, de manière particulièrement préférée plus de 90% d'unités isoprène hydrogénées, de manière tout particulièrement préférée plus de 95% d'unités isoprène hydrogénées.

5. Matières à mouler en polycarbonate selon la revendication 4, **caractérisées en ce qu'**en plus des unités isoprène, sont encore présents le 2,3-diméthylbutadiène, le butadiène, le propène et/ou l'isobutène, dans l'intervalle allant de 0 à 50% en moles (sur base des unités isoprène).

6. Matières à mouler en polycarbonate selon la revendication 1, **caractérisées en ce que** les hydrocarbures consistent en 15, 20, 25, 30, 35 ou 40 atomes C ou sont des mélanges des hydrocarbures mentionnés, de manière tout particulièrement préférée, le squalane (30 atomes C).

7. Matières à mouler en polycarbonate selon l'une quelconque des revendications précédentes, **caractérisées en ce que** sont présents en outre, d'autres additifs usuels dans les polycarbonates comme par exemple des thermostabilisants, des stabilisants U.V./IR, d'autres agents de démoulage, des agents de protection contre les flammes, des agents anti-bavure, des lubrifiants, des auxiliaires d'écoulement, des charges, des colorants comme des pigments ou concentrés de colorant, des fibres de ferre, des charges et des partenaire de mélange comme ABS, SAN, EPDM ou des polyesters à base d'acide téréphtalique et de diols.

8. Matières à mouler selon la revendication 7, **caractérisées en ce que** les polycarbonates utilisés sont ceux à base de 4,4'-dihydroxydiphényle, de 1,1-bis(4-hydroxyphényl)phényléthane, de 2,2-bis(4-hydroxyphényl)propane, de 2,2-bis(3,5-diméthyl-4-hydroxyphényl)propane, de 1,1-bis(4-hydroxyphényl)-m/p-diisopropylbenzène, de 1,1-bis(4-hydroxyphényl)-cyclohexane et de 1,1-bis(4-hydroxyphényl)-3,3,5-triméthylcyclohexane.

9. Matières à mouler selon la revendication 7 ou 8, **caractérisées en ce que** les polycarbonates utilisés sont ceux à base de 2,2-bis(4-hydroxyphényl)propane et/ou de 1,1-bis(4-hydroxyphényl)-3,3,5-triméthylcyclohexane et/ou de 1,1-bis(4-hydroxyphényl)-m/p-diisopropylbenzène.

10. Articles moulés préparés à partir des matières à mouler selon l'une ou plusieurs des revendications 1 à 9, en particulier mémoires de données optiques comme les CD, DVD et leurs développements, plaques massives, plaques de chambre creuse, vitrages d'automobile, verres diffusants, revêtements de lumières, de manière tout particulièrement préférée, CD, DVD et leurs développements.
